# EUROPÄISCHE PATENTSCHRIFT

(11) **EP 0 705 974 B1**
(45) Veröffentlichungstag und Bekanntmachung des Hinweises auf die Patenterteilung: **01.08.2001**
(21) Anmeldenummer: 95810589.2
(22) Anmeldetag: 20.09.1995
(51) Int. Cl.: F03B 11/06, F16C 17/06, F16C 41/02

(54) **Lagerung einer vertikalachsigen Wasserkraftmaschinenwelle**
Bearing arrangement of the shaft of a vertical-axis waterturbine
Support d'arbre vertical pour turbine à eau

(30) Priorität: 04.10.1994 DE 4435440
(43) Veröffentlichungstag der Anmeldung: 10.04.1996
(73) Patentinhaber: ALSTOM (Schweiz) AG, 5400 Baden (CH)
(72) Erfinder: Schwanda, Josef, CH-5242 Lupfig (CH)

(56) Entgegenhaltungen:
- EP-A- 0 320 996
- AT-B- 353 204
- DE-A- 2 537 743
- DE-A- 2 710 706
- DE-A- 4 229 772
- US-A- 4 421 426

## Beschreibung

### TECHNISCHES GEBIET

Die Erfindung bezieht sich auf eine vertikalachsige Wasserkraftmaschine, mit einer in einem Lagertragstern gelagerten Welle, welche Welle einen Laufring für ein Traglager aufweist, und Traglagersegmente vorgesehen sind, die sich über Einstellelemente auf einem fest mit dem Lagertragstern verbundenen Tragring abstützen.

Eine vertikalachsige Wasserkraftmaschine dieser Gatttung ist beispielsweise aus der EP-0 586 861 A1 bekannt.

### TECHNOLOGISCHER HINTERGRUND UND STAND DER TECHNIK

Elektrische Maschinen mit vertikaler Welle und grösserer Leistung werden alle mit Segmentlagern ausgerüstet. Das Lager ist bei grossem Maschinendurchmesser auf einem Lagertragstern abgestützt. Die Segmente des Traglagers stützen sich bei der bekannten Maschine über Einstellspindeln auf einem geschlossenen Lagertragring ab, der seinerseits auf einem Tragring des Lagertragsterns befestigt ist. Weil diese Einstellspindeln von unten zugänglich sein müssen, lässt sich die Bauhöhe der Maschine nicht beliebig verkleinern. Auch der Abstand des Traglagers zur Rotormitte, welche u.a. die kritische Drehzahl der Maschine bestimmt, ist nach unten hin begrenzt.

### KURZE DARSTELLUNG DER ERFINDUNG

Der Erfindung liegt die Aufgabe zugrunde, eine vertikalachsige Wasserkraftmaschine zu schaffen, deren Traglagersegmente einzeln einstellbar sind, und die bei optimaler Zugänglichkeit der Einstellelemente ein kleine Bauhöhe erlaubt.

Diese Aufgabe wird erfindungsgemäss dadurch gelöst, dass die Einstellelemente als radial verlaufende Kipphebel ausgebildet sind, welche Kipphebel einerseits am besagten Tragring und andererseits am Traglagersegment angreifen, und dass der freie Hebelarm über Einstellmittel am Lagertragstern angreift.

Die Kipphebel können entweder als ein- oder als zweiarmige Hebel wirken, wobei jeweils der kürzere Hebelarm radial innen und zwischen dem besagten Tragring und dem Traglagersegment zu liegen kommt.

Auf diese Weise wird die Einstellung der Segmente radial nach aussen verlegt, und zwar in einen Bereich, der gut zugänglich ist. Gegenüber herkömmlichen Lösungen entfällt die aufwendige Bearbeitung der Flächen an den Tragarmen, auf denen sich die Einstellspindeln abstützen.

Die Kipphebel nehmen wenig Platz in Axialrichtung in Anspruch. Ihr Platzbedarf in dieser Dimension ist vergleichbar mit bekannten elastischen Segmenttraganordnungen mit Federtellern oder Federbetten. Je nach Geometrie der Kipphebel, z.B. Querschnitt und/oder Länge des längeren Hebelarms, sind diese quer zu ihrer Längsrichtung elastisch. Damit wird auch die Abstützung der Traglagersegmente federnd nachgiebig. Die Vorausberechnung der Biegung der Kipphebel (Biegebalken) unter Last ist sehr genau möglich. Sie kann während der Montage leicht gemessen werden. Auch während des Betriebes ist eine Ueberwachung der Durchbiegung des "Balkens" leicht möglich, z.B. mit bekannten kapazitiven Abstandsgebern.

Ausführungsbeispiele der Erfindung sowie die damit erzielbaren weiteren Vorteile werden nachfolgend anhand der Zeichnung näher erläutert.

### KURZE BESCHREIBUNG DER ZEICHNUNG

In der Zeichnung sind Ausführungsbeispiele der Erfindung schematisch dargestellt, und zwar zeigt:
- Fig.1: einen Teil eines Längsschnitts durch eine vertikalachsige Wasserkraftmaschine, deren Welle mit dem Tragkopf einstückig ausgebildet ist, und individuell einstellbare Traglagersegmente aufweist, die mittels zweiarmigen Kipphebeln abgestützt sind;
- Fig.1a: eine mit Fig.1 vergleichbare Wasserkraftmaschine im Längsschnitt mit separatem Tragkopf;
- Fig.2: einen Querschnitt durch durch die Maschine gemäss Fig.1 längs deren Linie AA;
- Fig.2a: das Detail X aus Fig.2
- Fig.3: eine vergrösserte Seitenansicht eines Kipphebels;
- Fig.4: eine alternative Ausführungsform der Traglagersegment-Abstützung mit einarmigen Kipphebeln.

### WEGE ZUR AUSFÜHRUNG DER ERFINDUNG

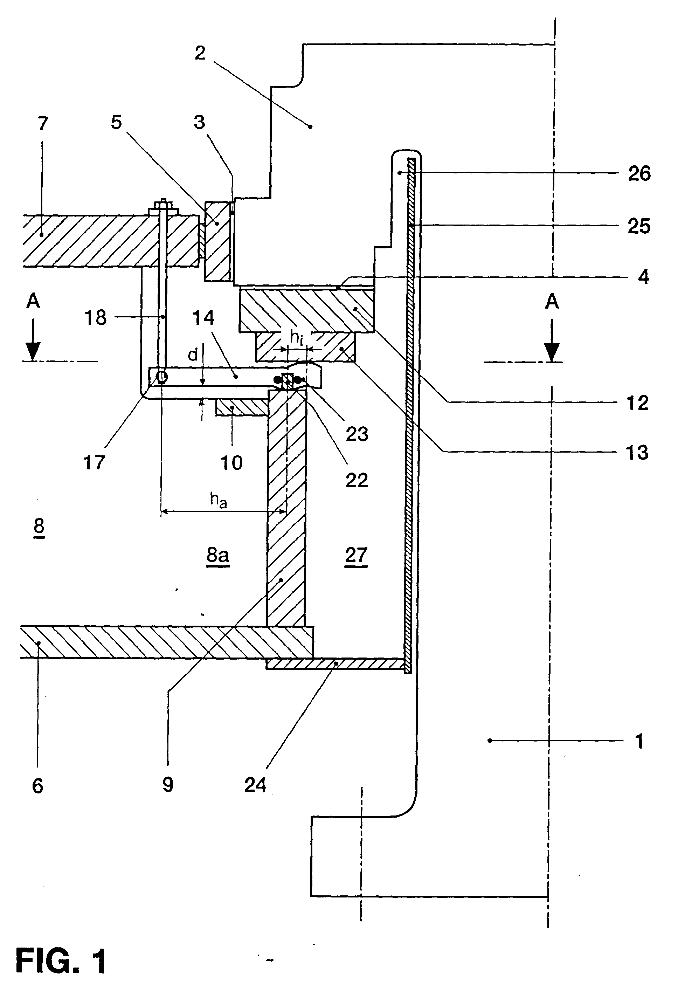

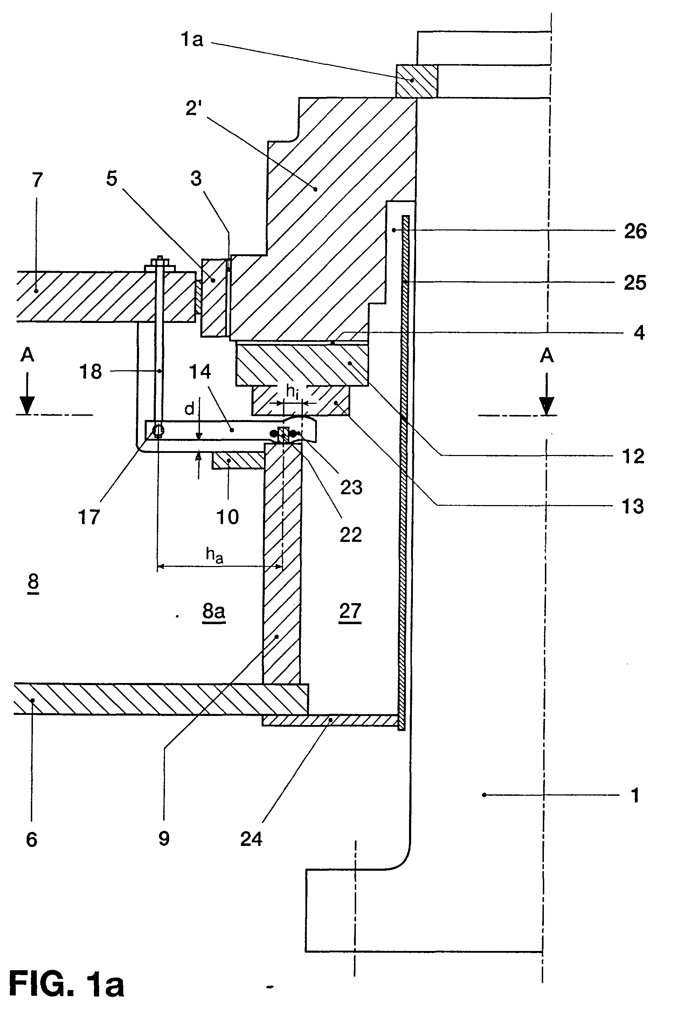

In Fig.1 bzw. Fig.1a der Zeichnung sind eine Welle 1 einer vertikalachsigen Wasserkraftmaschine mit einem Tragkopf 2 einstückig ausgebildet, bzw. der Tragkopf 2' ist mit der Welle 1 zweistückig ausgeführt, wobei die Welle 1 von einem Stützring la getragen wird. Der Tragkopf 2 weist am Aussenumfang eine Lauffläche 3 des Führungslagers und stirnseitig eine Lauffläche 4 des Traglagers auf. Das Führungslagersegment 5 des Führungslagers stützt sich ab am Innenumfang des Lagertragsterns, von dem in Fig.1 nur der untere Ring 6, der Zugring, und der obere Ring 7, der Druckring, sowie eine die beiden Ringe 6 und 7 verbindende radiale Rippe 8 sichtbar sind.

Die Rippen 8 sind am radial innenliegenden Ende mit einer Ausnehmung versehen. Ein Tragring 9 ist rundum mit dem vorkragenden Ende 8a aller Rippen 8 und dem unteren Ring 6 des Lagertragsterns verschweisst. Auf die radial verlaufenden Kanten der vorkragenden Enden 8a der Rippen 8 ist ein Versteifungsring 10 aufgelegt und mit diesen verschweisst.

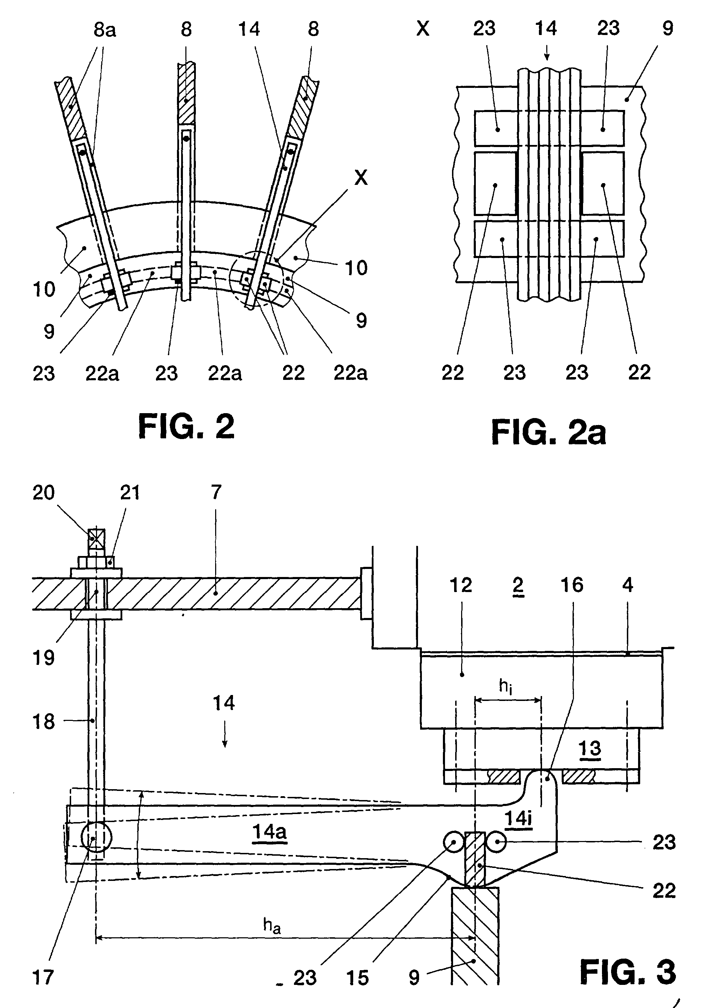

Die Traglagersegmente 12 liegen je auf einem Segmentteller 13 auf. Zur Höhenverstellung der Traglagersegmente 12 sind Kipphebel 14 vorgesehen. Diese sind - wie die gegenüber Fig.1 vergrösserte Darstellung gemäss Fig.3 zeigt - als zweiarmige Hebel ausgebildet. Sie besitzen keinen Drehpunkt im eigentlichen Sinn. Ihr "Drehpunkt" bildet eine zylinderabschnittförmige Materialerweiterung 15 an der Unterseite des Kipphebels 13, die auf der oberen Stirnfläche des Tragrings 9 aufliegt. Auf der Oberseite ist am radial inneren Ende des Kipphebels 14 eine kalottenförmige Materialerweiterung 16 vorgesehen, welche an der Unterseite des Segmenttellers 13 anliegt.

Am radial aussenliegenden Ende des Kipphebels 14 ist eine horizontale Bohrung vorgesehen, in welcher ein Bolzen 17 mit einer quer zur Bolzenlängsachse verlaufender Gewindebohrung liegt. In diese ist eine Gewindestange 18 eingeschraubt, welche durch eine Gewindebuchse 19 im oberen Ring 7 des Lagertragsterns geführt ist. Das obere Ende der Gewindestange 18 weist einen Vierkant 20 auf. Eine Kontermutter 21 dient der Sicherung. Nach Lösen der Kontermutter 21 kann durch Linksoder Rechtsdrehen der Gweindestange 18 der Kipphebel 14 auf-oder abbewegt, und damit der zugehörige Segmentteller 13 und das zugehörige Traglagersegment 12 mehr oder weniger an die Lauffläche 4 des Traglagers angepresst werden. Durch Messen der Durchbiegung des Kipphebels 14 kann jede Segmentbelastung genau ermittelt und eingestellt werden. Das Verhältnis der Hebelarme hᵢ/hₐ ist dabei in weiten Grenzen frei wählbar, wobei die Länge des äusseren, längeren Hebelarms hₐ und dessen Querschnitt auch die Elastitizät der Tragsegmentabstützung mitbestimmt.

Der Abstand d zwischen der Unterseite des Kipphebels 14 und der radial verlaufenden Kante des vorkragenden Endes 8a der Rippe 8 dient als leicht zu erfassendes Richtmass während der Montage der Maschine. Es lässt sich auch während des Betriebes leicht überwachen, z.B. in an sich bekannter Weise mittels kapazitiver Abstandsmessung.

Gemäss Fig.2a sind zur seitlichen Führung der Kipphebel 14 auf der oberen Stirnfläche des Tragrings 9 paarweise Nocken 22 oder Ringsegmente 22' (in Fig.2 strichliert eingezeichnet) vorgesehen. Diese Nocken 22 oder Ringsegmente 22a verhindern ein Verschieben der Kipphebel 14 in Umfangsrichtung infolge Drehmoment. In radialer Richtung sind die Kipphebel 14 mittels paarweise angeordneter horizontal verlaufender Bolzen 23 in den Kipphebeln 14 gesichert.

Trag- und Führungslager sind in bekannter Weise gegenüber der Welle 1, nach unten und gegen den Lagertragstern abgeschlossen. So erfolgt die Abdichtung nach unten durch einen (aus Montagegründen) zwei- oder mehrteiligen Dichtring 24, der radial aussen mit dem unteren Ring 6 verschraubt ist. Radial innen ist am Dichtring 24 das untere Ende eines die Welle umfassenden Rohres 25 befestigt. Dieses Rohr 25 endet in einer tiefen Eindrehung 26 im Tragkopf 2, in welche Eindrehung auch das Rohr 25 in Achsrichtung bis über die Lauffläche 3 des Führungslagers reicht.

Die Abdichtung gegen den Lagertragstern hin erfolgt durch eine in Fig.1 nicht eingezeichnete Trennwand, die mit den beiden Ringen 6 und 7 und mit den Rippen 8 verschweisst ist und normalerweise eine durch einen Montagedeckel verschliessbare Montageöffnung aufweist, die gleichfalls in Fig.1 fortgelassen wurde.

Ohne den durch die Erfindung gesteckten Rahmen zu verlassen, bieten sich eine Fülle von Ausgestaltungen des Erfindungsgegenstandes, die nachfolgend kurz skizziert werden sollen.

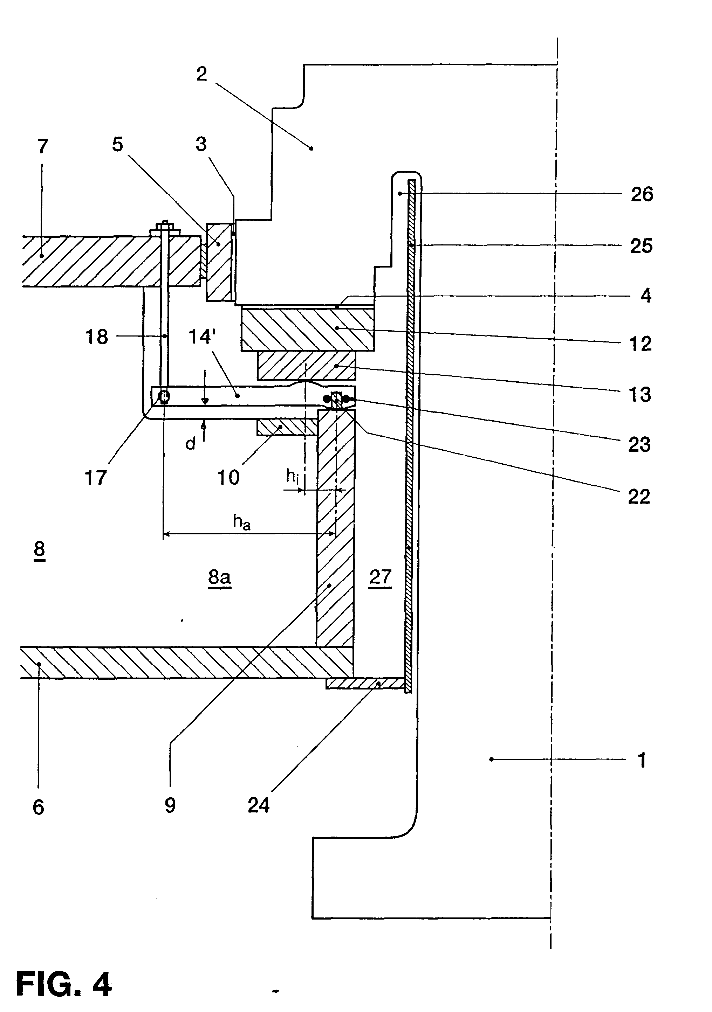

Anstelle eines als zweiarmiger Hebel wirkenden Kipphebels 14 kann gemäss Fig.4 auch ein als einarmiger Hebel wirkender Kipphebel 14' verwendet werden, was jedoch den Raum zwischen Welle 1 und Tragring 9, die sogenannte Pumpenkammer 27, verkleinert.

Wie aus Fig.2 hervorgeht, liegen die Kipphebel jeweils in der Richtung der radialen Rippen 8. Sie können jedoch auch jeweils zwischen zwei benachbarten radialen Rippen 8 angeordnet sein. Auch können pro Traglagersegment ein oder mehrere Kipphebel 14 bzw. 14' vorgesehen sein.

Die Kipphebel 14 selbst können massiv ausgeführt sein. Vorteilhaft ist es jedoch, diese aus unter sich gleichartigen dünnen Einzelblechen zusammenzusetzen (vgl. Fig.2a), die mittels Laser-Schneidmaschinen ausgeschnitten und untereinander verschweist oder vernietet sind.

### BEZEICHNUNGSLISTE

- 1: Welle
- 1a: Stützring
- 2: Tragkopf
- 2': Separater Tragkopf
- 3: Lauffläche des Führungslagers
- 4: Lauffläche des Traglagers
- 5: Führungslagersegmente
- 6: Unterer Ring des Lagertragsterns (Zugring)
- 7: Oberer Ring des Lagertragsterns (Druckring)
- 8: radiale Rippen
- 8a: vorkragende Enden von 8
- 9: Tragring
- 10: Versteifungsring
- 12: Traglagersegmente
- 13: Segmentteller
- 14,14': Kipphebel
- 14a: äussere Kipphebelteil
- 14i: innerer Kipphebelteil
- 15: zylinderabschnittförmiger Vorsprung an 14
- 16: kalottenförmiger Vorsprung an 14
- 17: Bolzen
- 18: Gewindestange
- 19: Gewindebuchse
- 20: Vierkant an 18
- 21: Kontermutter
- 22: paarweise angeordnete Nocken an 9
- 22a: Ringsegmente an 9
- 23: Bolzen in 14
- 24: Dichtring
- 25: Rohr
- 26: Eindrehung in 2
- 27: Pumpenkammer
- d: Abstand zwischen 14 und 8a
- ha: wirksamer Hebelarm von 14a
- hi: wirksamer Hebelarm von 14i

## Patentansprüche

1. Vertikalachsige Wasserkraftmaschine, mit einer in einem Lagertragstern gelagerten Welle, welche Welle einen integrierten Tragkopf (2) oder einen separaten Tragkopf (2') mit einen Laufring für ein Traglager aufweist, und Traglagersegmente (12) vorgesehen sind, die sich über Einstellelemente auf einem fest mit dem Lagertragstern (7,8) verbundenem Tragring (9) abstützen, dadurch gekennzeichnet, dass die Einstellelemente als radial verlaufende Kipphebel (14;14') ausgebildet sind, welche Kipphebel einerseits am besagten Tragring (9) und andererseits am Traglagersegment (12) angreifen, und dass der freie Hebelarm (14a) der Kipphebel (14) über Einstellmittel (18,19,20) am Lagertragstern (7) angreift.

2. Wasserkraftmaschine nach Anspruch 1, dadurch gekennzeichnet, dass der Kipphebel (14) einen zweiarmigen Hebel (14a,14i) bildet, wobei der Drehpunkt des Hebels auf dem besagten Tragring liegt, der eine, kürzere Hebelarm (14i) radial innen liegt und am Traglagersegment (12) angreift und der andere, längere Hebelarm (14a) über Einstellmittel (18,19,20) am Lagertragstern (7) angreift.

3. Wasserkraftmaschine nach Anspruch 1, dadurch gekennzeichnet, dass der Kipphebel (14) einen einarmigen Hebel bildet, wobei der Drehpunkt des Hebels auf dem besagten Tragring (9) liegt, der eine, kürzere Hebelarm (14i) radial innen liegt und am Traglagersegment (12) angreift und der andere, längere Hebelarm (14a) über Einstellmittel (18,19,20) am Lagertragstern (7) angreift.

4. Wasserkraftmaschine nach Anspruch 2 oder 3, dadurch gekennzeichnet, dass Mittel (22,23) zur Sicherung der Kipphebel (14) ind radialer und/oder im Umfangsrichtung vorgesehen sind.

5. Wasserkraftmaschine nach Anspruch 2 oder 3, dadurch gekennzeichnet, dass die Kipphebel (14) aus unter sich gleichartigen Einzelblechen zusammengesetzt sind.

## Claims

1. Vertical-axis waterpower machine having a shaft mounted in a bearing-supporting star, which shaft has an integrated supporting head (2) or a separate supporting head (2') having a track ring for a supporting bearing, and supporting-bearing segments (12) are provided which are supported via adjusting elements on a supporting ring (9) firmly connected to the bearing-supporting star (7, 8), characterized in that the adjusting elements are designed as radially extending rocking levers (14; 14'), which rocking levers act on the said supporting ring (9) on the one hand and on the supporting-bearing segment (12) on the other hand, and in that the free lever arm (14a) of the rocking levers (14) acts on the bearing-supporting star (7) via adjusting means (18, 19, 20).

2. Waterpower machine according to Claim 1, characterized in that the rocking lever (14) forms a double-armed lever (14a, 14i), the fulcrum of the lever lying on the said supporting ring, the one, shorter lever arm (14i) lying radially to the inside and acting on the supporting-bearing segment (12), and the other, longer lever arm (14a) acting on the bearing-supporting star (7) via adjusting means (18, 19, 20).

3. Waterpower machine according to Claim 1, characterized in that the rocking lever (14) forms a single-armed lever, the fulcrum of the lever lying on the said supporting ring (9), the one, shorter lever arm (14i) lying radially to the inside and acting on the supporting-bearing segment (12), and the other, longer lever arm (14a) acting on the bearing-supporting star (7) via adjusting means (18, 19, 20).

4. Waterpower machine according to Claim 2 or 3, characterized in that means (22, 23) are provided for securing the rocking levers (14) in the radial and/or peripheral direction.

5. Waterpower machine according to Claim 2 or 3, characterized in that the rocking levers (14) are composed of individual plates similar to one another.

## Revendications

1. Moteur hydraulique d'axe vertical, comprenant un arbre monté dans une étoile de support de palier, lequel arbre présente une tête porteuse intégrée (2) ou une tête porteuse séparée (2') avec une bague de roulement pour un palier support, et des segments de palier support (12) sont prévus, lesquels s'appuient par l'intermédiaire d'éléments de réglage sur un anneau porteur (9) connecté fixement à l'étoile de support de palier (7, 8), caractérisé en ce que les éléments de réglage sont conçus en tant que leviers oscillants s'étendant radialement (14, 14'), lesquels leviers oscillants viennent en prise d'une part avec ledit anneau porteur (9) et d'autre part avec le segment de palier support (12), et en ce que le bras de levier libre (14a) du levier oscillant (14) vient en prise par l'intermédiaire de moyens de réglage (18, 19, 20) avec l'étoile de support de palier (7).

2. Moteur hydraulique selon la revendication 1, caractérisé en ce que le levier oscillant (14) forme un levier à deux bras (14a, 14i), le centre de rotation du levier se trouvant sur ledit anneau porteur, le bras de levier plus court (14i) se trouvant radialement vers l'intérieur et venant en prise avec le segment de palier support (12) et l'autre bras de levier plus long (14a) venant en prise par l'intermédiaire de moyens de réglage (18, 19, 20) avec l'étoile de support de palier (7).

3. Moteur hydraulique selon la revendication 1, caractérisé en ce que le levier oscillant (14) forme un levier à un bras, le centre de rotation du levier se trouvant sur ledit anneau porteur (9), le bras de levier plus court (14i) se trouvant radialement vers l'intérieur et venant en prise avec le segment de palier support (12) et l'autre bras de levier plus long (14a) venant en prise par l'intermédiaire de moyens de réglage (18, 19, 20) avec l'étoile de support de palier (7).

4. Moteur hydraulique selon la revendication 2 ou 3, caractérisé en ce que des moyens (22, 23) sont prévus pour fixer le levier oscillant (14) dans la direction radiale et/ou périphérique.

5. Moteur hydraulique selon la revendication 2 ou 3, caractérisé en ce que les leviers oscillants (14) sont assemblés par des tôles individuelles de même type.
